# EUROPÄISCHE PATENTANMELDUNG

(11) **EP 4 464 429 A1**
(43) Veröffentlichungstag der Anmeldung: **20.11.2024**
(21) Anmeldenummer: 24168199.8
(22) Anmeldetag: 03.04.2024
(51) Int. Cl.: B08B 9/032, B08B 9/20, B08B 9/46, B67C 3/00

(54) **FLASCHENWASCHMASCHINE UND VERFAHREN ZUR ÜBERWACHUNG UND STEUERUNG EINER FLASCHENWASCHMASCHINE**

(30) Priorität: 19.05.2023 DE 102023113164
(71) Anmelder: Krones AG, 93073 Neutraubling (DE)
(72) Erfinder: MEYER, Andreas, 93073 Neutraubling (DE); STUBENHOFER, Markus, 93073 Neutraubling (DE); SIEGMUND, Michael, 93073 Neutraubling (DE); REDEMSKI-MEYER, Tanja, 93073 Neutraubling (DE); RUMMLER, Daniel, 93073 Neutraubling (DE); JAGDMANN, Thies, 93073 Neutraubling (DE)
(74) Vertreter: Grünecker Patent- und Rechtsanwälte PartG mbB

(57) **Zusammenfassung**

Flaschenwaschmaschine (1) zur Reinigung von Leerflaschen (2) und ein Verfahren zu dessen Überwachung und Steuerung. Die Flaschenwaschmaschine (1) umfasst Sensoren (3-6) zur lokalen Überwachung wenigstens eines Verbrauchsmittelparameters (7, 8) und wenigstens eines Maschinenparameters betreffend den Transport der Leerflaschen (2) und/oder die Temperatur einer von den Leerflaschen (2) durchlaufenen Waschzone oder der Leerflaschen am Eingang oder Ausgang zu bzw. von einer solchen Waschzone, einen Datenausgang (13) zum Versenden mittels derartiger sensorischer Überwachung gewonnener Messdaten (14) aus der Flaschenwaschmaschine (1) und wenigstens einen Dateneingang (15) zum Empfang externer Steuerdaten (16) zur Steuerung der Flaschenwaschmaschine (1). Mittels der Messdaten (14) und der empfangenen Steuerdaten (16) lässt sich die Flaschenwaschmaschine (1) programmiert fernsteuern und ermöglicht eine ferngesteuerte Optimierung von Produktions- und Instandhaltungsprozessen.

## Beschreibung

Die Erfindung betrifft eine Flaschenwaschmaschine zur Reinigung von Leerflaschen und ein Verfahren zur Überwachung und Steuerung einer solchen Flaschenwaschmaschine.

Flaschenwaschmaschinen sind geläufige Bestandteile von Anlagen zur Abfüllung flüssiger Produkte, wie beispielsweise Getränke, in Flaschen. Es ist prinzipiell bekannt, Maschinenparameter der Flaschenwaschmaschine, die beispielsweise den Transport der Flaschen oder die Temperierung von Reinigungsbädern betreffen, laufend messtechnisch zu überwachen. Ähnliches gilt für Zustände technischer Aggregate beispielsweise betreffend Ventilspiele, Laufzeiten von Antrieben und Ketten, Kalibrierungen, Aufheizkurven von Wärmetauschern oder dergleichen sowie für Parameter von Verbrauchsmitteln für Flaschenwaschmaschinen, wie beispielsweise Biozide, Reinigungsmittel, Schmierstoffe oder dergleichen, deren Füllstände, Verbräuche und/oder Eigenschaften, wie beispielsweise pH-Werte oder Konzentrationen, laufend überwacht werden können. Messungen solcher Maschinen- und Verbrauchsmittelparameter liefern in der Regel Istwerte, die beispielsweise durch Vergleich mit Sollwerten zur Steuerung bzw. Regelung der Flaschenwaschmaschine und/oder zum Instandhaltungsmanagement verwendet werden können.

Nachteilig ist jedoch, dass die zugehörige Betriebsoptimierung und -planung vergleichsweise viel Erfahrung mit der jeweiligen Anlage und Personal mit entsprechender Qualifikation erfordert.

Es besteht daher demgegenüber Verbesserungsbedarf, beispielsweise um Flaschenwaschmaschinen nach Installation, Instandhaltung oder Produktionsumstellung schneller zu optimieren und/oder zur effizienteren Bereitstellung von Verbrauchsmitteln und gegebenenfalls technischer Aggregate zur Instandhaltung.

Die gestellte Aufgabe wird mit einer Flaschenwaschmaschine und mit einem Verfahren zur Überwachung und Steuerung einer Flaschenwaschmaschine gemäß den unabhängigen Ansprüchen sowie mit einer Abfüllanlage umfassend die Flaschenwaschmaschine gelöst. Bevorzugte Ausführungsformen sind Gegenstand der Unteransprüche.

Die Flaschenwaschmaschine dient demnach der Reinigung von Leerflaschen, bei denen es sich beispielsweise um Mehrwegflaschen beispielsweise aus Glas oder Kunststoff handelt. Diese werden in der Regel vor deren Befüllung mit einem flüssigen Produkt, wie beispielsweise einem Getränk, gereinigt. Hierbei werden beispielsweise Etiketten abgelöst und Produktreste ausgewaschen, also Rückstände aus einem vorangegangenen Gebrauch der Flaschen entfernt.

Die Flaschenwaschmaschine umfasst hierzu: Sensoren zur lokalen Überwachung wenigstens eines Verbrauchsmittelparameters in Form eines Zustroms, Verbrauchs, Vorrats und/oder einer Eigenschaft eines Verbrauchsmittels der Flaschenwaschmaschine und zur Überwachung wenigstens eines Maschinenparameters und/oder Maschinenzustands betreffend den Transport der Leerflaschen oder eines zu deren Reinigung verwendeten Reinigungsmediums, beispielsweise einer Reinigungslauge oder Spritzwasser, und/oder betreffend die Temperatur einer von den Leerflaschen durchlaufenen Waschzone oder die Temperatur der Leerflaschen am Eingang oder Ausgang zu bzw. von einer solchen Waschzone; wenigstens einen Datenausgang zum Versenden mittels derartiger sensorischer Überwachung gewonnener Messdaten aus der Flaschenwaschmaschine; wenigstens einen Dateneingang zum Empfang externer Steuerdaten zur Steuerung der Flaschenwaschmaschine; und eine elektronische Steuereinrichtung zur Steuerung der Flaschenwaschmaschine auf der Grundlage der empfangenen Steuerdaten und der mittels der sensorischen Überwachung gewonnenen Messdaten.

Sensoren der beschriebenen Funktion können optional zudem in vorgelagerten Maschinen oder Baugruppen vorhanden sein.

Die elektronische Steuereinrichtung kann auf prinzipiell bekannte Weise steuerprogrammierbar sein. Der elektronischen Steuereinrichtung kann eine übergeordnete Anlagensteuerung und/oder anderweitige externe Steuerung zugeordnet sein, um Steuerungsfunktionen dorthin auszulagern.

Die gewonnenen Messdaten können somit außerhalb der Flaschenwaschmaschine gesammelt und verarbeitet werden, beispielsweise in einem maschinenübergreifenden Überwachungssystem. Auch kann man dort die externen Steuerdaten erzeugen und an die Flaschenwaschmaschine übermitteln.

Unter einem maschinenübergreifenden Überwachungssystem kann hier jedes IT-System mit der beschriebenen Funktionalität verstanden werden, sofern dieses die Flaschenwaschmaschine mit anderen Prozesseinheiten wenigstens einer Abfüllanlage vernetzt. Ein solches IT-System wird vorzugsweise extern bereitgestellt, also basierend auf außerhalb der Flaschenwaschmaschine angeordneten Recheneinheiten, Servern oder dergleichen, es kann somit cloud-basiert sein. Denkbar sind aber ebenso geschlossene IT-Systeme, die Prozesseinheiten nur innerhalb einer bestimmten Abfüllanlage oder nur Prozesseinheiten von Abfüllanlagen eines bestimmten Anlagenbetreibers miteinander vernetzen.

Somit ist eine zentrale Verarbeitung der Messdaten und Erzeugung der Steuerdaten extern möglich, beispielsweise um die mit den Sensoren gewonnenen Messdaten miteinander und/oder mit historischen Messdaten zu verrechnen. Auch sind Vergleiche mit Vorgabewerten und/oder Auslegungsdaten möglich. Dadurch lässt sich beispielsweise prognostizieren, wie sich bestimmte Konstellationen von Maschinen- und Verbrauchsmittelparametern auf zukünftige Produktionsprozesse auswirken können. Auch lassen sich historische Messdaten oder anderweitige Erfahrungswerte von Flaschenwaschmaschinen vergleichbarer Bauart in die zentrale / externe Datenverarbeitung einbeziehen.

Auch ist durch Vergleich von Ist- und Sollzuständen eine vorbeugende Wartung von Antrieben und/oder Spritzungen möglich, beispielsweise unter Berücksichtigung von Versteinung, Verschleppungsmengen, Säuerung oder dergleichen. Ferner können auf dieser Grundlage Wartungsintervalle empfohlen oder vorgegeben und/oder Ersatzteile vorgehalten oder angefordert werden.

Auf dieser Grundlage können die Steuerdaten automatisch erzeugt und an die Flaschenwaschmaschine gesandt werden, um beispielsweise einen bestimmten Maschinenzustand und/oder einen Betriebsmodus der Flaschenwaschmaschine auf geeignete Weise anzupassen. Beispielsweise kann ein Aktor der Flaschenwaschmaschine dadurch direkt angesteuert oder ein zugehöriger Sollwert angepasst werden. Dies kann den überwachten Verbrauchsmittel- und/oder Maschinenparameter betreffen.

Unter einer Überwachung ist hier definitionsgemäß eine kontinuierlich oder in ausreichend kurzen zeitlichen Abständen wiederholte Messung zu verstehen, so dass sich daraus ein zeitlicher Verlauf des überwachten Parameters oder Zustands innerhalb eines laufenden Produktions- oder Instandhaltungsprozesses bestimmen oder zur Planung eines solchen Prozesses prognostizieren lässt.

Verbrauchsmittel im Sinne der vorliegenden Erfindung sind insbesondere solche, für die ein chargenweiser Nachschub aus Transportbehältern oder dergleichen erforderlich ist, beispielsweise Biozide (Desinfektionsmittel), Reinigungsmittel, Säuren und Laugen zur pH-Regulierung, technische Additive wie beispielsweise Korrosionsschutzmittel oder Schmierstoffe für Antriebe, Ventile oder dergleichen.

Im Gegensatz dazu können Verbräuche aus (öffentlichen) Versorgungsnetzen gesehen werden. Strom-, Gas- und Frischwasserverbräuche können im Sinne der vorliegenden Erfindung daher als Maschinenparameter der Flaschenwaschmaschine angesehen und entsprechend überwacht werden.

Maschinenparameter im Sinne der vorliegenden Erfindung betreffen vorrangig die Leistung von Aggregaten und/oder die damit erzielte Behandlungseffekte wie beispielsweise Temperaturen, Transportgeschwindigkeiten, Durchflussraten, Umwälzraten und Drücke beispielsweise von Spritzungen, Unterschwallungen oder Überschwallungen.

Maschinenzustände im Sinne der vorliegenden Erfindung betreffen vorrangig Eigenschaften und/oder Funktionen aktiver und/oder passiver Komponenten der Flaschenwaschmaschine, die die Behandlung der Leerflaschen beeinflussen können, wie beispielsweise Transportantriebe, Pumpen, Ventile, Dichtungen oder Rohrleitungen. Die Funktion von Ventilen lässt sich beispielsweise durch Analyse von Schaltspielen und/oder Schaltzyklen abschätzen.

Die beschriebene zentrale Auswertung der erhobenen Messdaten und Erzeugung der Steuerdaten erfolgt vorzugsweise in einem maschinenübergreifenden Überwachungssystem zur digitalen ortsunabhängigen Überwachung von Maschinenzuständen (Condition-Monitoring-Tool, auch Watchdog genannt), das beispielsweise in einer Daten-Cloud bzw. auf zugehörigen Servern in prinzipiell bekannter Weise ortsunabhängig bereitgestellt werden kann. Unter "maschinenübergreifend" kann hier insbesondere auch "anlagenübergreifend" verstanden werden, also beispielsweise wenigstens zwei Produktionsstandorte umfassend.

Mit einem derart maschinenübergreifenden Überwachungssystem ist zudem eine Anzeige von Messdaten, Maschinenzuständen und/oder Handlungsempfehlungen auf mobilen Endgeräten möglich, beispielsweise auf einem Smartphone oder einer Smartwatch. Auch können auf diese Weise Prognosedaten ermittelt und ausgegeben werden, beispielsweise eine mit Vorräten von Verbrauchsmitteln mögliche Restlaufzeit der Flaschenwaschmaschine. Auch können Anweisungen für den Nachschub bestimmter Verbrauchsmittel mobil ausgegeben werden. Solche Angaben können beispielsweise in Ergänzung zu den Steuerdaten auch direkt an die Flaschenwaschmaschine gesandt und dort angezeigt werden.

Denkbar ist beispielsweise eine Anpassung von Parametern, wie zum Beispiel Mengen von Additiven auf Basis von Messwerten oder Anlageninformationen aus übergeordneten Systemen. Diese könnten prinzipiell auch manuell eingegeben werden. Beispielsweise ist eine Erhöhung einer Additivmenge bei Feststellen einer erhöhten Etiketten-Verschleppung an einem Leerflascheninspektor möglich.

In einer die Flaschenwaschmaschine umfassenden Abfüllanlage können zudem weitere Messdaten und/oder Maschinenzustandsdaten ermittelt und an das maschinenübergreifende Überwachungssystem übermittelt werden, beispielsweise von wenigstens einer Messvorrichtung zum Erfassen einer Umweltbedingung im Bereich der Flaschenwaschmaschine, von einer der Flaschenwaschmaschine vor- oder nachgeschalteten Inspektionsvorrichtung zur beispielsweise bildgebenden Inspektion der zu reinigenden bzw. gereinigten Leerflaschen, und/oder von wenigstens einer mit der Flaschenwaschmaschine verbundenen Versorgungs- oder Entsorgungsvorrichtung zur Bereitstellung eines Verbrauchsmittels der Flaschenwaschmaschine bzw. zur Entsorgung von Prozesswasser, Reinigungslauge der Flaschenwaschmaschine oder dergleichen. Solche Messdaten / Maschinenzustandsdaten könnten beispielsweise auch im Bereich der Abfüllung, beim Auspacken der Leerflaschen und/oder Abschrauben von Verschlüssen gewonnen werden.

Somit kann zum einen der Betrieb der Flaschenwaschmaschine zeitnah an die auf diese Weise festgestellten Messdaten und/oder Maschinenzustandsdaten angepasst werden. Zum anderen können derartige Messdaten und/oder Maschinenzustandsdaten vom maschinenübergreifenden Überwachungssystem auch für spätere Datenauswertungen gespeichert und beispielsweise für statistische Auswertungen oder dergleichen verwendet werden. Der Produktionsbetrieb der Flaschenwaschmaschine lässt sich somit sowohl im Hinblick auf den aktuellen Produktionsbetrieb in der Abfüllanlage als auch hinsichtlich Erfahrungswerten mit der Flaschenwaschmaschine oder bauartgleichen Flaschenwaschmaschinen schnell und präzise optimieren.

Beispielsweise können Maschinenparameter bezogen auf den Sinnerschen Kreis basierend auf Messwerten oder anderen Eingangsgrößen, wie z.B. einem Verschmutzungsgrad, angepasst werden, gegebenenfalls auch mittels künstlicher Intelligenz anhand entsprechender Algorithmen, beispielsweise zur Optimierung hinsichtlich Verschmutzung, Kosten oder dergleichen.

Bei dem Verfahren zur Überwachung und Steuerung einer Flaschenwaschmaschine überwacht man sensorisch Istwerte wenigstens eines Verbrauchsmittelparameters, der einen lokalen Zustrom, Verbrauch oder Vorrat und/oder eine Eigenschaft eines Verbrauchsmittels der Flaschenwaschmaschine betrifft, sowie Istwerte wenigstens eines Maschinenparameters oder Maschinenzustands, der den Transport der Leerflaschen in der Flaschenwaschmaschine oder eines zu deren Reinigung verwendeten Reinigungsmediums und/oder betreffend die Temperatur einer von den Leerflaschen durchlaufenen Behandlungszone oder die Temperatur der Leerflaschen am Eingang oder Ausgang zu bzw. von einer solchen Behandlungszone betrifft. Ferner versendet man auf dieser Grundlage gewonnene Messdaten in einen Bereich außerhalb der Flaschenwaschmaschine und insbesondere außerhalb der Abfüllanlage und empfängt im Gegenzug entsprechend außerhalb bereitgestellte Steuerdaten zur Steuerung der Flaschenwaschmaschine. Schließlich wird die Flaschenwaschmaschine auf der Grundlage der empfangenen Steuerdaten und der mittels der sensorischen Überwachung gewonnenen Messdaten auf elektronisch programmierte Weise gesteuert.

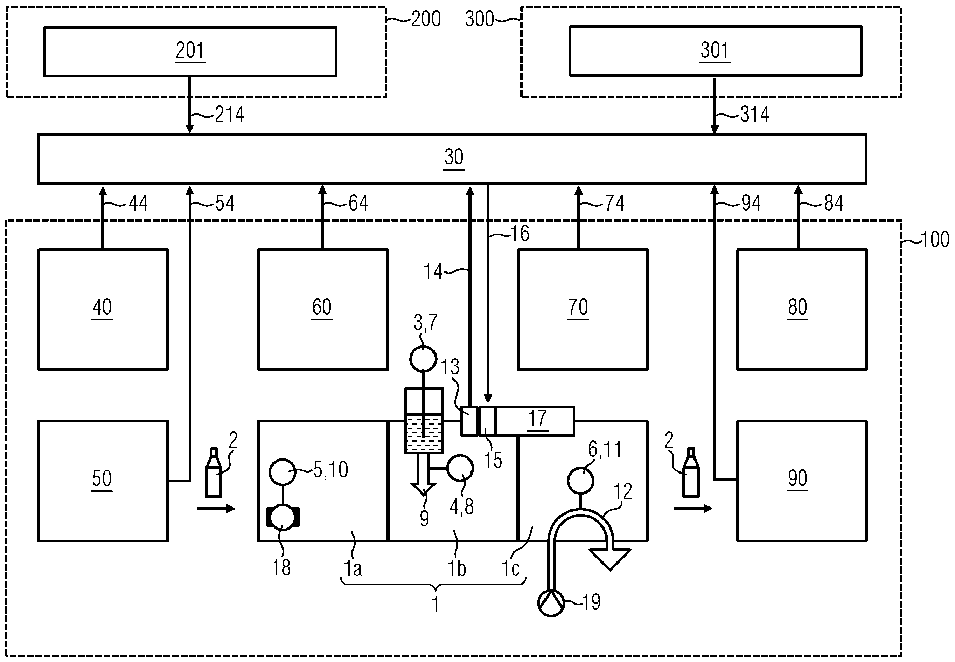

Eine bevorzugte Ausführungsform der Erfindung ist zeichnerisch dargestellt. Die einzige Figur zeigt schematisch eine Flaschenwaschmaschine als Bestandteil einer Abfüllanlage und in Kombination mit einem maschinenübergreifenden Überwachungssystem.

Wie die Figur erkennen lässt, gehört die Flaschenwaschmaschine 1 zu einer Abfüllanlage 100 und kann auf prinzipiell bekannte Weise mehrere Behandlungszonen 1a, 1b, 1c umfassen, die von Leerflaschen 2 insbesondere zu deren Reinigung, insbesondere in Flaschenkörben aufgenommen, sukzessive durchlaufen werden. Die Leerflaschen 2 sind beispielsweise Mehrweg-Glasflaschen, von denen Rückstände aus ihrem vorherigen Gebrauch auf prinzipiell bekannte Weise zu entfernen sind.

Die Flaschenwaschmaschine 1 umfasst Sensoren 3, 4, 5, 6 zur laufenden Überwachung wenigstens eines Verbrauchsmittelparameters 7, 8 wenigstens eines Verbrauchsmittels 9 der Flaschenwaschmaschine 1 und zur Überwachung wenigstens eines Maschinenparameters 10, 11 der Flaschenwaschmaschine 1 betreffend den Transport der Leerflaschen 2 (beispielsweise eine Geschwindigkeit oder ein Behälterdurchsatz pro Zeiteinheit), die Temperatur einer der von den Leerflaschen 2 durchlaufenen Behandlungszone 1a - 1c (beispielsweise die Temperatur eines dortigen Reinigungsbads) und/oder der Leerflaschen 2 am Eingang oder Ausgang zu bzw. von einer der Behandlungszonen 1a - 1c.

Im gezeigten Beispiel misst ein erster Sensor 3 einen ersten Verbrauchsmittelparameter 7, bei dem es sich hier um einen Füllstand eines Verbrauchsmittels 9 handelt, beispielsweise eines Biozids zur Desinfektion der Flaschenwaschmaschine 1, dessen Zufuhr hier lediglich symbolisiert dargestellt ist. Ferner misst ein zweiter Sensor 4 einen zweiten Verbrauchsmittelparameter 8, der hier beispielhaft eine Eigenschaft des Verbrauchsmittels 9 betrifft, beispielsweise dessen Konzentration, Temperatur oder pH-Wert.

Vorzugsweise wird (unabhängig von der dargestellten Ausführungsform) eine Vielzahl von Verbrauchsmittelparametern 7, 8 der Flaschenwaschmaschine 1 überwacht, beispielsweise ein Zustrom, Verbrauch, Vorrat und/oder eine Eigenschaft des jeweiligen Verbrauchsmittels 9.

Überwachte Verbrauchsmittel 9 sind (unabhängig von der dargestellten Ausführungsform) insbesondere solche, die für den Produktionsbetrieb und die regelmäßige Instandhaltung der Flaschenwaschmaschine 1 eingesetzt werden und bedarfsabhängig nachzufüllen sind, beispielsweise für eine hygienische und zuverlässige Reinigung der Leerflaschen 2, zur Reinigung und/oder separaten Desinfektion der Flaschenwaschmaschine 1 und/oder als Hilfsstoffe für dessen Aggregate bzw. Aktoren, beispielsweise zur Schmierung von Transportketten oder dergleichen.

Als Beispiele für Maschinenparameter im Sinne der vorliegenden Erfindung wird hier ein erster Maschinenparameter 10 in Form einer Transportgeschwindigkeit der Leerflaschen in der Flaschenwaschmaschine 1 mit einem dritten Sensor 5 und ein zweiter Maschinenparameter 11 in Form einer Behandlungstemperatur in der Behandlungszone 1c, beispielsweise eines einer dort eingesetzten Reinigungsmediums 12 wie Reinigungs- und/oder Spülflüssigkeit, mit einem vierten Sensor 6 gemessen. Beim Reinigungsmedium 12 kann es sich beispielsweise im Wesentlichen um ein Laugenbad oder dergleichen handeln. Andere denkbare Maschinenparameter 11 wären beispielsweise der Leitwert, der pH-Wert oder eine mikrobiologische Kenngröße für das Reinigungsmedium 12 oder dergleichen Prozessmedien, wie dafür eingesetztes Prozesswasser.

Wenigstens ein Verbrauchsmittel 9, beispielsweise ein Biozid und/oder ein anderes technisches Additiv, kann dem im Produktionsbetrieb der Flaschenwaschmaschine 1 in dieser zirkulierenden Reinigungsmedium 12 beispielsweise mittels prinzipiell bekannter Dosiereinrichtungen (nicht dargestellt) automatisch zudosiert werden. Ebenso ist zur Instandhaltung eine entsprechende Zudosierung zu einer CIP-Reinigungsflüssigkeit und/oder zu dabei verwendetem Spülwasser (nicht dargestellt) möglich.

Die Flaschenwaschmaschine 1 umfasst wenigstens einen Datenausgang 13 zum Versenden von Messdaten 14, die mit wenigstens einem der Sensoren 3 - 6 gewonnen werden. Bei den Messdaten 14 kann es sich sowohl um Rohdaten als auch um auf geeignete Weise im Bereich der Flaschenwaschmaschine 1 verarbeitete Messdaten handeln.

Unter dem Versenden der Messdaten 14 ist deren Export in einen Bereich außerhalb der Flaschenwaschmaschine 1 und insbesondere in einen Bereich außerhalb der die Flaschenwaschmaschine 1 umfassenden Abfüllanlage 100 zu verstehen.

Die Flaschenwaschmaschine 1 umfasst wenigstens einen Dateneingang 15 zum Empfang externer Steuerdaten 16, also solcher, die außerhalb der Flaschenwaschmaschine 1 und insbesondere außerhalb der diese umfassenden Abfüllanlage 100 zur Steuerung der Flaschenwaschmaschine 1 erzeugt und von dort importiert werden.

Während des Produktionsbetriebs werden die Messdaten 14 vorzugsweise laufend exportiert, ebenso ist dann vorzugsweise laufend der Empfang der externen Steuerdaten 16 möglich.

Die Flaschenwaschmaschine 1 umfasst wenigstens eine speicherprogrammierbare Steuereinrichtung 17 zur Steuerung der Flaschenwaschmaschine 1 mittels der über den wenigstens einen Dateneingang 15 empfangenen Steuerdaten 16 und mittels zumindest eines Anteils der Messdaten 14, die mittels der Sensoren 3 - 6 gewonnen werden. Diese Messdaten 14 können von der Steuereinrichtung 17 intern verarbeitet und/oder bereits geeignet aufbereitet von den Sensoren 3 - 6 oder zugehörigen Messgeräten an diese übergeben werden. Der Steuereinrichtung 17 kann eine übergeordnete elektronische Steuereinheit (nicht dargestellt) zur Auslagerung einzelner der beschriebenen Steuerungsfunktionen zugeordnet sein.

Die Steuerdaten 16 können beispielsweise Sollwerte einzelner Verbrauchsmittelparameter 7, 8 und/oder einzelner Maschinenparameter 10, 11 sein, die zur Steuerung der Flaschenwaschmaschine 1 auf prinzipiell bekannte Weise mit von den Sensoren 3 - 6 ermittelten Istwerten verglichen werden können. Die Steuerdaten 16 können aber auch Steuersignale zur direkten Ansteuerung von Aktoren der Flaschenwaschmaschine 1 sein. Beispielsweise können die Steuerdaten 16 verwendet werden, einen Kettenantrieb 18 für den Transport der Leerflaschen 2 durch die Flaschenwaschmaschine 1 und/oder wenigstens eine Pumpe 19 zum Fördern von Reinigungsmedium 12 zu steuern.

Die beschriebenen Steuerungsfunktionen (bzw. Regelungsfunktionen) sind als Beispiele der genannten Steuerung der Flaschenwaschmaschine 1 zu verstehen und basieren auf entsprechender Programmierung der Steuereinrichtung 17, die prinzipiell eine bekannte Architektur aufweisen sowie Eingabe- und Ausgabefunktionen für Bediener umfassen kann.

Der Export der Messdaten 14 und der Import der Steuerdaten 16 erfolgt hier zwischen der Flaschenwaschmaschine 1 und einem maschinenübergreifenden Überwachungssystem 30, das auch als Condition-Monitoring-Tool oder sogenannter Watchdog bezeichnet werden kann.

Das maschinenübergreifende Überwachungssystem 30 arbeitet vorzugsweise auf der Grundlage einer Daten-Cloud und kann somit beispielsweise auf externen Servern bereitgestellt werden.

Der Export und/oder Import der Messdaten 14 bzw. der Steuerdaten 16 ist beispielsweise drahtlos von/zu der Flaschenwaschmaschine 1 möglich. Auch wäre es denkbar, einzelne Behandlungszonen 1a - 1c im Sinne eines modularen Aufbaus der Flaschenwaschmaschine 1 mit eigenen Datenausgängen 13 und Dateneingängen 15 der beschriebenen Art auszustatten (nicht dargestellt).

Im maschinenübergreifenden Überwachungssystem 30 können die von der Flaschenwaschmaschine 1 versandten Messdaten 14 gespeichert und ausgewertet werden. Diese können zum einen der Flaschenwaschmaschine 1 insgesamt und zum anderen aber auch einzelnen Reinigungsprozessen (Produktionschargen) der Flaschenwaschmaschine 1 zugeordnet werden. Dies ermöglicht statistische Auswertungen der Messdaten 14 auch über mehrere Reinigungsprozesse hinweg im Sinne einer historischen Prozess-/Anlagenoptimierung.

Das maschinenübergreifende Überwachungssystem 30 kann zudem Messdaten anderer Prozesseinheiten der Abfüllanlage 100 verarbeiten und mit Messdaten 14 der Flaschenwaschmaschine 1 vergleichen und/oder verrechnen.

Beispielsweise kann die Abfüllanlage 100 folgende Prozesseinheiten umfassen: eine Füllmaschine 40 zum Abfüllen von Abfüllprodukten (nicht dargestellt) in die Leerflaschen 2; einen der Flaschenwaschmaschine 1 zugeordneten Kühlturm 50; eine Entsorgungseinheit 60 zur Abwasserentsorgung und gegebenenfalls Aufbereitung von Reinigungsmedium 12, wie beispielsweise Waschlauge oder Spülwasser; eine Versorgungseinheit 70 zum Bereitstellen eines Verbrauchsmittels 9 wie beispielsweise Chlordioxid; einen Tunnelpasteur 80 zum Pasteurisieren der in der Füllmaschine 40 hergestellten Abfüllprodukte; und/oder eine Inspektionseinheit 90 zur Inspektion der gereinigten Leerflaschen 2. Weitere mögliche Bestandteile der Abfüllanlage 100 im obigen Sinne sind beispielsweise Aggregate zur Vorbehandlung auf den Leerflaschen vorhandener Etiketten mittels Laser, Mikrowellen oder dergleichen (nicht dargestellt)

Solche Prozesseinheiten können jeweils optional zugehörige Messdaten 44, 54, 64, 74, 84, 94 durch entsprechenden Datenexport an das maschinenübergreifende Überwachungssystem 30 senden, wobei es sich um Verbrauchsmittel- und/oder Maschinenparameter der jeweiligen Prozesseinheit handeln kann.

Somit ist eine maschinenübergreifende Auswertung von Messdaten 14, 44, 54, 64, 74, 84, 94 im Überwachungssystem 30 möglich und somit eine entsprechend umfassende Erstellung und Übermittlung externer Steuerdaten 16 an die Flaschenwaschmaschine 1.

Das maschinenübergreifende Überwachungssystem 30 kann zudem anlagenübergreifend arbeiten, beispielsweise unter Einbeziehung von Messdaten 214, 314, die von wenigstens einer Flaschenwaschmaschine 201, 301 wenigstens einer weiteren Abfüllanlage 200, 300 übermittelt werden. Ebenso könnten Messdaten anderer Prozesseinheiten (nicht dargestellt) der jeweiligen Abfüllanlage 200, 300 zum maschinenübergreifenden Überwachungssystem 30 übertragen werden.

Durch eine anlagenübergreifende Auswertung von Messdaten 14, 214, 314 von Flaschenwaschmaschinen 1, 201, 301, die beispielsweise hinsichtlich bestimmter Spezifikationen baugleich sein können, lässt sich eine Vielzahl von Messdaten der beschriebenen Art miteinander verrechnen und als Grundlage für die Ausgabe externer Steuerdaten 16 für die Flaschenwaschmaschine 1 verwenden. Somit können zahlreiche Erfahrungswerte sowohl zur maschinenübergreifenden Prozess- und Anlagenoptimierung innerhalb der Abfüllanlage 100 als auch anlagenübergreifend verwendet werden, also unter Berücksichtigung mehrerer Abfüllanlagen 100, 200, 300.

Mit Hilfe des beschriebenen Exports von Messdaten 14 (optional 214, 314) und Imports externer Steuerdaten 16 können Maschinenfunktionen, die Verbrauchsmittelversorgung und/oder die Instandhaltung der Flaschenwaschmaschine 1 beispielsweise vom maschinenübergreifenden Überwachungssystem 30 automatisch ferngesteuert werden, also auf digitalem Wege bzw. durch ein Online-Management.

Die Sensoren 3 - 6 können sowohl Verbrauchsmittelparameter 7, 8, wie beispielsweise Konzentrationen und/oder Füllstände von Verbrauchsmitteln 9, wie beispielsweise von Additiven für das Reinigungsmedium 12 oder dergleichen, überwachen, ebenso Maschinenparameter 10, 11, bei denen es sich beispielsweise um eine Wassertemperatur, eine Wasserqualität, einen Wasserverbrauch, einen Energieverbrauch, einen Pumpendruck, eine Filterdurchlässigkeit oder dergleichen handeln kann.

Auch können Umgebungsbedingungen bzw. Umgebungsparameter, beispielsweise die Außenlufttemperatur und/oder Außenluftfeuchte, im Bereich der Flaschenwaschmaschine 1, und/oder mikrobiologische Parameter, beispielsweise des Reinigungsmediums 12, gemessen werden und als Messdaten 14 in die externe Datenauswertung und Erzeugung von Steuerdaten 16 einfließen.

Die Erfassung der Messdaten 14 und die Übertragung der Steuerdaten 16 ist samt zugehöriger Steuerung der Flaschenwaschmaschine 1 daher vollautomatisch möglich. Beispielsweise können Steuersignale für einzelne Aktoren der Flaschenwaschmaschine 1 direkt an diese übertragen werden und/oder Betriebsarten bzw. Steuerprogramme der Flaschenwaschmaschine 1 mittels der Steuerdaten 16 automatisch ausgewählt werden.

In die Verarbeitung der Messdaten 14 und die Erzeugung der Steuerdaten 16 können auch bei der insbesondere ausgangsseitigen Leerflaschenkontrolle gewonnene Messdaten 94 einfließen. Zu diesem Zweck können beispielsweise die Qualität der Reinigung und die Unversehrtheit der gereinigten Leerflaschen 2 im Produktionsbetrieb laufend überwacht werden. Infolge unzureichender Kontrollergebnisse kann die Flaschenwaschmaschine 1 mittels der externen Steuerdaten 16 automatisch auf die jeweiligen Qualitätsabweichungen reagieren. Aber auch eine eingangsseitige Leerflaschenkontrolle zur Detektion eines Verschmutzungsgrads kann prinzipiell entsprechende Messdaten zur Steuerung der jeweils nötigen Reinigung liefern.

Das maschinenübergreifende Überwachungssystem 30 kann selbstlernende Algorithmen verwenden, um anhand eines zunehmenden Erfahrungsschatzes aus Messdaten 14 sukzessive die Behandlungsqualität und/oder Effizienz der Produktion bzw. Instandhaltung zu optimieren.

Auf der Grundlage der empfangenen Messdaten 14 kann das maschinenübergreifende Überwachungssystem 30 automatisch auf bestimmte Maschinenzustände bzw. Fehlerzustände der Flaschenwaschmaschine 1 oder auf Auswertungen der Messdaten 14 reagieren und beispielsweise eine Ferndiagnose durchführen und/oder eine Fehlerbehebung ferngesteuert initiieren.

Zudem können Messdaten 14 von der Flaschenwaschmaschine 1 auf prinzipiell bekannte Weise direkt verarbeitet werden, beispielsweise in der Steuereinrichtung 17, um interne Steuerdaten (nicht dargestellt) zu erzeugen.

Mit der Flaschenwaschmaschine 1 und dem beschriebenen Verfahren zu deren Überwachung und Steuerung können Prozessbedingungen der Leerflaschenreinigung durch eine zusätzliche Auswertung historischer Messdaten 14 (und optional 214, 314) früherer Reinigungsprozesse / Produktionschargen sukzessive verbessert werden. Zudem können Verbrauchsmittel 9 effizienter eingesetzt und deren Nachschub zuverlässig und bedarfsgerecht automatisch organisiert werden.

Die erhobenen Messdaten 14 (und optional 214, 314) können prinzipiell standortübergreifend für eine umfassende externe Datenanalyse und Optimierung von Reinigungsprozessen eingesetzt werden.

In der beschriebenen Flaschenwaschmaschine 1 bzw. mit dem beschriebenen Verfahren können Maschinenparameter 10, 11 und/oder Maschinenzustände beispielsweise betreffend die Funktion von Antriebsketten, zugehöriger Motoren, die Belagbildung in Verrohrungen/Leitungen, die Funktionstüchtigkeit von Ventilen, Wärmetauschern, Spritzdüsen oder dergleichen, die Temperierung einzelner Behandlungszonen 1a, 1b, 1c, die Dosierung von Bioziden zur Desinfektion, die Funktion von Pumpen und/oder Ultraschall-Modulen, die Funktionalität von Dosier- und Messeinrichtungen oder dergleichen zentral überwacht und gegebenenfalls automatisch optimiert werden. Dadurch können mögliche Fehlerquellen und Personalbedarf für diese Zwecke erheblich reduziert werden.

Beispielsweise verschlechtern Beläge in Wärmetauschern deren Wirkungsgrad und führen so zu erhöhten Verbrauchswerten. Kontrolle der Belagbildung ermöglicht eine diesbezüglich bedarfsgerechte Wartung.

Beispielsweise lässt sich durch eine Flaschenzählung am Ein und Auslauf ein Glasbruch in der Flaschenwaschmaschine mit entsprechenden Glasmengen ermitteln, um somit Hinweise auf den Verschleiß von Bauteilen (beispielsweise Rutschbleche, Saugschlitze oder dergleichen) und/oder die Glasqualität der Leerflaschen 2 zu erhalten.

Der Einsatz von Verbrauchsmittel 9 lässt sich entsprechend optimieren, beispielsweise von oxidierenden Bioziden (wie Chlordioxid oder Chlorbleichlauge) oder Organobioziden / nicht oxidierenden Bioziden (wie Isothiazolinone) zur Desinfektion der Flaschenwaschmaschine 1 bzw. von Reinigungsmedium 12 oder dergleichen Prozesswasser, der Einsatz von Reinigungsmitteln, von technischen Additiven wie Glanzmitteln oder Mitteln zum Korrosionsschutz, zur Unterdrückung von Steinbildung oder zur Härtestabilisierung, und/oder von Säuren und Laugen zur pH-Regulierung. Ebenso kann der Verbrauch von Schmierstoffen, beispielsweise zur Lagerschmierung, innerhalb der Flaschenwaschmaschine 1 minimiert werden.

Mit den beschriebenen Sensoren 3 - 6 kann beispielsweise der Füllstand, Verbrauch und/oder eine Eigenschaft, wie die Konzentration bestimmter Verbrauchsmittel 9, beispielsweise von Bioziden zur Desinfektion, überwacht werden. Ebenso kann beispielsweise eine Wasserqualität, wie beispielsweise pH-Wert, visuelle Sauberkeit, Trübung, mikrobiologische Belastung oder dergleichen von Prozessmedien wie beispielsweise des eingesetzten Reinigungsmediums 12 laufend überwacht werden. Ebenso sind Prüfungen der Materialverträglichkeit möglich, beispielsweise der Korrosivität bestimmter Verbrauchsmittel 9 in Leitungen und an den Innenwänden der Flaschenwaschmaschine 1.

Auf der Grundlage der Messdaten 14 (und optional 214, 314) können Instandhaltungsprozesse automatisch angefordert oder eingeleitet und/oder Ersatzteile vorkommissioniert oder bestellt werden, beispielsweise die Auswahl oder Aktivierungsintervalle bestimmter Reinigungsprogramme, oder ein Austausch von Reinigungsmedium 12, wie beispielsweise Reinigungs- und/oder Spülflüssigkeit.

Art, Anzahl und Anordnung der dargestellten Sensoren 3 - 6 und der mittels der Steuerdaten 16 gesteuerten Aktoren, wie beispielsweise eines Kettenantriebs 18 und von Pumpen 19, sind lediglich beispielhaft und stellvertretend für andere prinzipiell bekannte Sensoren, Aktoren und Aggregate von Flaschenwaschmaschinen 1. Dies gilt auch für die genannten Verbrauchsmittelparameter 7, 8 und Maschinenparameter 10, 11.

## Patentansprüche

1. Flaschenwaschmaschine (1) zur Reinigung von Leerflaschen (2) insbesondere in einer Abfüllanlage (100), umfassend:
- Sensoren (3-6) zur lokalen Überwachung wenigstens eines Verbrauchsmittelparameters (7, 8) in Form eines Zustroms, Verbrauchs, Vorrats und/oder einer Eigenschaft eines Verbrauchsmittels (9) der Flaschenwaschmaschine und zur Überwachung wenigstens eines Maschinenparameters oder Maschinenzustands (10, 11) wenigstens betreffend: den Transport der Leerflaschen oder eines zu deren Reinigung verwendeten Reinigungsmediums (12); und/oder die Temperatur einer von den Leerflaschen durchlaufenen Behandlungszone (1a, 1b, 1c) oder der Leerflaschen am Eingang oder Ausgang zu bzw. von einer solchen Behandlungszone;
- wenigstens einen Datenausgang (13) zum Versenden mittels derartiger sensorischer Überwachung gewonnener Messdaten (14) aus der Flaschenwaschmaschine;
- wenigstens einen Dateneingang (15) zum Empfang externer Steuerdaten (16) zur Steuerung der Flaschenwaschmaschine; und
- eine elektronische Steuereinrichtung (17) zur Steuerung der Flaschenwaschmaschine auf der Grundlage der empfangenen Steuerdaten (16) und mittels der sensorischen Überwachung gewonnener Messdaten (14).

2. Flaschenwaschmaschine nach Anspruch 1, wobei die Sensoren (3 - 6) dazu ausgebildet sind, Ist-Werte von wenigstens zwei der folgenden Verbrauchsmittelparameter (7, 8), Maschinenparameter (10, 11) und/oder Maschinenzustände zu messen: Füllstand, Verbrauch oder Konzentration eines Biozids; Füllstand, Verbrauch oder Konzentration eines Mittels zur Steinverhütung und/oder Härtestabilisierung; Füllstand, Verbrauch oder Konzentration eines Entschaumungsmittels oder dergleichen Additive; Füllstand, Verbrauch oder Konzentration eines Anti-Scuffing-Mittels; Füllstand, Verbrauch oder Konzentration eines Korrosionsschutzmittels; pH-Wert, Trübung, Farbe oder Partikelgehalt einer Waschlauge; Füllstand oder Verbrauch eines Schmierstoffs; Leitwert, Trübung oder mikrobielle Belastung von Waschlauge oder Spülwasser; Temperatur der Leerflaschen, einer Waschlauge oder von Spülwasser; Geschwindigkeit oder elektrische Leistung eines Antriebs (18) zum Flaschentransport durch die Flaschenwaschmaschine; Ventilstellung an, Durchfluss durch oder Belagdicke in einer Leitung für ein Verbrauchsmittel (9), eine Waschlauge oder Spülwasser; elektrische Leistung einer Pumpe (19) für ein Verbrauchsmittel, eine Waschlauge oder Spülwasser; elektrische Leistung einer Dosiereinrichtung für ein Verbrauchsmittel; Spritzdruck in einer Behandlungszone der Flaschenwaschmaschine.

3. Flaschenwaschmaschine nach Anspruch 1 oder 2, wobei die Steuereinrichtung (17) dazu programmiert ist, einen Maschinenzustand und/oder Betriebsmodus der Flaschenwaschmaschine (1), insbesondere den überwachten Verbrauchsmittelparameter (7, 8) und/oder Maschinenparameter (10, 11), auf der Grundlage der empfangenen Steuerdaten (16) automatisch anzupassen.

4. Flaschenwaschmaschine nach einem der vorigen Ansprüche, wobei der Dateneingang (15) zum insbesondere drahtlosen Empfang der Steuerdaten (16) von einem maschinenübergreifenden Überwachungssystem (30) und der Datenausgang (13) zum insbesondere drahtlosen Versand der Messdaten (14) an dieses ausgebildet sind.

5. Abfüllanlage (100) umfassend die Flaschenwaschmaschine (1) nach Anspruch 4 und wenigstens eine der folgenden und jeweils zum Versand von Messdaten (14) und/oder Maschinenzustandsdaten an das maschinenübergreifende Überwachungssystem (30) eingerichteten Prozesseinheiten: eine der Flaschenwaschmaschine vorgeschaltete oder nachgeschaltete Inspektionsvorrichtung (90) zur Inspektion der zu reinigenden bzw. gereinigten Leerflaschen (2); eine mit der Flaschenwaschmaschine verbundene Versorgungseinheit (70) zum Bereitstellen eines Verbrauchsmittels (9) der Flaschenwaschmaschine; eine mit der Flaschenwaschmaschine verbundene Entsorgungseinheit (60) zur Entsorgung und insbesondere Aufbereitung von Reinigungsmedium (12) für die Flaschenwaschmaschine; und einen der Flaschenwaschmaschine zugeordneten Kühlturm (50).

6. Verfahren zur Überwachung und Steuerung einer Flaschenwaschmaschine (1) für Leerflasche (2) insbesondere in einer Abfüllanlage (100), wobei man: Istwerte wenigstens eines Verbrauchsmittelparameters (7, 8) betreffend einen Zustrom, Verbrauch, Vorrat und/oder eine Eigenschaft eines Verbrauchsmittels (9) der Flaschenwaschmaschine und Istwerte wenigstens eines Maschinenparameters (10, 11) oder Maschinenzustands betreffend den Transport der Leerflaschen oder eines zu deren Reinigung verwendeten Reinigungsmediums (12) und/oder betreffend die Temperatur einer von den Leerflaschen durchlaufenen Behandlungszone (1a - 1c) oder der Leerflaschen am Eingang oder Ausgang zu bzw. von einer solchen Behandlungszone sensorisch überwacht; auf dieser Grundlage gewonnene Messdaten (14) in einen Bereich außerhalb der Flaschenwaschmaschine versendet; außerhalb der Flaschenwaschmaschine bereitgestellte Steuerdaten (16) zur Steuerung der Flaschenwaschmaschine empfängt; und die Flaschenwaschmaschine auf der Grundlage der empfangenen Steuerdaten und mittels der sensorischen Überwachung gewonnener Messdaten elektronisch programmiert steuert.

7. Verfahren nach Anspruch 6, wobei die Verbrauchsmittelparameter (7, 8), Maschinenparameter (10, 11) und/oder Maschinenzustände umfassen: Füllstand, Verbrauch oder Konzentration eines Biozids; Füllstand, Verbrauch oder Konzentration eines Mittels zur Steinverhütung und/oder Härtestabilisierung; Füllstand, Verbrauch oder Konzentration eines Entschaumungsmittels oder dergleichen Additive; Füllstand, Verbrauch oder Konzentration eines Anti-Scuffing-Mittels; Füllstand, Verbrauch oder Konzentration eines Korrosionsschutzmittels; pH-Wert, Trübung, Farbe oder Partikelgehalt einer Waschlauge; Füllstand oder Verbrauch eines Schmierstoffs; Leitwert, Trübung oder mikrobielle Belastung von Waschlauge oder Spülwasser; Temperatur der Leerflaschen, einer Waschlauge oder von Spülwasser; Geschwindigkeit oder elektrische Leistung eines Antriebs (18) zum Flaschentransport durch die Flaschenwaschmaschine; Ventilstellung an, Durchfluss durch oder Belagdicke in einer Leitung für ein Verbrauchsmittel (9), eine Waschlauge oder Spülwasser; elektrische Leistung einer Pumpe (19) für ein Verbrauchsmittel, eine Waschlauge oder Spülwasser; elektrische Leistung einer Dosiereinrichtung für ein Verbrauchsmittel; Spritzdruck in einer Behandlungszone der Flaschenwaschmaschine.

8. Verfahren nach Anspruch 6 oder 7, wobei man einen Maschinenzustand und/oder Betriebsmodus der Flaschenwaschmaschine (1), insbesondere den überwachten Verbrauchsmittelparameter (7, 8) und/oder Maschinenparameter (10, 11), mittels der empfangenen Steuerdaten (16) automatisch anpasst.

9. Verfahren nach wenigstens einem der Ansprüche 6 bis 8, wobei die Messdaten (14) an ein maschinenübergreifendes und insbesondere cloud-basiertes Überwachungssystem (30) versandt und die Steuerdaten (16) von diesem empfangen werden.

10. Verfahren nach Anspruch 9, wobei die Steuerdaten (16) vom maschinenübergreifenden Überwachungssystem (30) auf der Grundlage der übermittelten Messdaten (14) eines laufenden Produktionsprozesses in der Flaschenwaschmaschine (1) und entsprechender Messdaten wenigstens eines historischen Produktionsprozesses in derselben und/oder in einer im Wesentlichen baugleichen Flaschenwaschmaschine berechnet werden.

11. Verfahren nach Anspruch 9 oder 10, wobei die Steuerdaten (16) vom maschinenübergreifenden Überwachungssystem (30) auf der Grundlage der übermittelten Messdaten (14) und wenigstens eines an den in der Flaschenwaschmaschine zu reinigenden oder gereinigten Leerflaschen (2) gemessenen Inspektionsergebnisses und/oder wenigstens eines Messergebnisses und/oder Maschinenzustands einer mit der Flaschenwaschmaschine verbundenen Versorgungseinheit (70) zur Bereitstellung eines Verbrauchsmittels (9) und/oder wenigstens eines Messergebnisses und/oder Maschinenzustands einer mit der Flaschenwaschmaschine verbundenen Entsorgungseinheit (60) zur Entsorgung und insbesondere Aufbereitung von Waschlauge und/oder Spülwasser und/oder wenigstens eines Messergebnisses und/oder Maschinenzustands eines der Flaschenwaschmaschine zugeordneten Kühlturms (50) berechnet werden.

12. Verfahren nach einem der Ansprüche 9 bis 11, wobei das maschinenübergreifende Überwachungssystem (30) ferner eingerichtet ist, aus den übermittelten Messdaten (14) Anweisungen für den Nachschub wenigstens eines überwachten Verbrauchsmittels (9) und/oder für den Austausch wenigstens eines überwachten Bauteils oder einer überwachten Baugruppe der Flaschenwaschmaschine (1) auszugeben und insbesondere derartige Anweisungen an die Flaschenwaschmaschine (1) zu senden.
